# EUROPÄISCHE PATENTANMELDUNG

(11) **EP 4 163 746 A1**
(43) Veröffentlichungstag der Anmeldung: **12.04.2023**
(21) Anmeldenummer: 21201042.5
(22) Anmeldetag: 05.10.2021
(51) Int. Cl.: G05B 19/418

(54) **LEITSYSTEM FÜR EINE TECHNISCHE ANLAGE MIT VERKLEINERTEN ANSICHTEN VON ANLAGENBILDERN**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Vorgeschlagen wird ein Leitsystem (15) für eine technische Anlage, insbesondere Prozess- oder Fertigungsanlage, das wenigstens einen Operator Station Server (16) und wenigstens einen Operator Station Client (17) aufweist, wobei der Operator Station Server (16) dazu ausgebildet ist, Visualisierungsinformationen zu erzeugen und zur Visualisierung an den Operator Station Client (17) zu übertragen, um ein Bedienen und Beobachten der technischen Anlage durch einen Operator zu ermöglichen, wobei die Visualisierungsinformationen wenigstens ein erstes Anlagenbild (1) und ein zweites Anlagenbild (9) der technischen Anlage umfassen, in welchen digitale Repräsentationen (2, 3, 4, 5, 6) von Komponenten der technischen Anlage und dazugehörige Daten (7, 8, 9) für das Bedienen und Beobachten der technischen Anlage visuell dargestellt oder darstellbar sind. Das Leitsystem (14) ist dadurch gekennzeichnet, dass es dazu ausgebildet ist, während der visuellen Darbietung des ersten Anlagenbildes (1) an den Operator durch den Operator Station Client (17), bedingt durch ein eintretendes Ereignis, das zweite Anlagenbild (9) durch den Operator Station Client (17) dem Operator visuell darzubieten, wobei eine Darstellungsgröße des ersten Anlagenbildes (1) und des zweiten Anlagenbildes (9) voneinander unterschiedlich ausgebildet sind, und wobei eine Darstellungsgröße des zweiten Anlagenbildes (9) vorzugsweise kleiner ist als eine Darstellungsgröße des ersten Anlagenbildes (1).

## Beschreibung

Die Erfindung betrifft ein Leitsystem für eine technische Anlage, insbesondere Prozess- oder Fertigungsanlage, das wenigstens einen Operator Station Server und wenigstens einen Operator Station Client aufweist, wobei der Operator Station Server dazu ausgebildet ist, Visualisierungsinformationen zu erzeugen und zur Visualisierung an den Operator Station Client zu übertragen, um ein Bedienen und Beobachten der technischen Anlage durch einen Operator zu ermöglichen, wobei die Visualisierungsinformationen wenigstens ein erstes und ein zweites Anlagenbild der technischen Anlage umfassen, in welchen digitale Repräsentationen von Komponenten der technischen Anlage und dazugehörige Daten für das Bedienen und Beobachten der technischen Anlage visuell dargestellt oder darstellbar sind. Außerdem betrifft die Erfindung ein Verfahren zum Betreiben eines Leitsystems für eine technische Anlage, insbesondere Prozess- oder Fertigungsanlage.

Die Bedienung und Beobachtung (verfahrens-)technischer Anlagen erfolgt durch Anlagenbilder, in denen der verfahrenstechnische Prozess durch Bildelemente schematisch dargestellt wird, welche wiederum durch Prozesswerte und Alarme dynamisiert werden. Durch ein Alarmmanagement werden Operatoren der technischen Anlage zu den Anlagenbildern geführt, in denen die Bildelemente der alarmgebenden Prozessobjekte visualisiert werden.

Für eine detailliertere Beobachtung und Bedienung können Operatoren in Anlagenbildern so genannte Detailansichten - wie etwa Trendkurven, Faceplates von Prozessobjekten, Meldefolgeanzeigen, usw. - öffnen. Werden während einer detaillierten Bedienung oder Beobachtung in einem geöffneten Anlagenbild nun Alarme aus anderen Anlagenbildern gemeldet, muss der Operator entscheiden, ob er seine begonnene Bedienung und Beobachtung unterbricht, um sich um die gemeldeten Alarme zu kümmern, oder ober er die Bedienung und Beobachtung zuerst beendet.

Unterbricht der Operator seine gegenwärtige Bedienung und Beobachtung - sofern dies überhaupt möglich ist -, hat er durch die Anlagenbildwechsel Mühe und Aufwand zum Zustand des Anlagenbildes vor der Unterbrechung zurückzukehren. Dies ist dann besonders nachteilhaft, wenn er wegen dem aufkommenden Alarm - weil z.B. von niedriger Kritikalität - seine angefangene Tätigkeit erst gar nicht hätte unterbrechen müssen. Die zuvor beschriebene Führung durch das Alarmmanagement kann demnach auch nachteilhaft sein, wenn Operatoren durch neu gemeldete Alarme ihre Tätigkeiten wegen Anlagenbildwechsel zum alarmmeldenden Anlagenbild unterbrechen müssen, auch wenn die Behandlung des aufgetretenen Alarms hätte aufgeschoben werden können.

Bekannte Leitsysteme, die einem Operator Anlagenbilder mit verschiedenen Objekten mittels mehrere Operator Station Server darbieten, sind beispielsweise in der EP 3 637 205 A1 und der EP 3 736 647 A1 offenbart.

Der Erfindung liegt die Aufgabe zugrunde, ein Leitsystem für eine technische Anlage anzugeben, das eine verbesserte Bedienung und Beobachtung der technischen Anlage ermöglicht.

Diese Aufgabe wird gelöst durch ein Leitsystem für eine technische Anlage, insbesondere eine Fertigungs- oder Prozessanlage, mit den Merkmalen des Anspruchs 1. Zudem wird die Aufgabe gelöst durch ein Verfahren zum Betreiben eines Leitsystems für eine technische Anlage, insbesondere Prozess- oder Fertigungsanlage, mit den Merkmalen des Anspruchs 11. Vorteilhafte Weiterbildungen ergeben sich aus den abhängigen Ansprüchen.

Ein Leitsystem eingangs beschriebener Art ist erfindungsgemäß dadurch gekennzeichnet, dass dazu ausgebildet ist, während der visuellen Darbietung des ersten Anlagenbildes an den Operator durch den Operator Station Client, bedingt durch ein eintretendes Ereignis, das zweite Anlagenbild durch den Operator Station Client dem Operator visuell darzubieten, wobei eine Darstellungsgröße des zweiten Anlagenbildes kleiner als eine Darstellungsgröße des ersten Anlagenbildes ist.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann neben dem Operator Station Server und dem Operator Station Client weitere Komponenten, wie beispielsweise sogenannte prozess- oder fertigungsnahe Komponenten umfassen, die zur Ansteuerung von Aktoren bzw. Sensoren dienen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem "Operator Station Server" wird vorliegend ein Server verstanden, der zentral Daten eines Bedien- und Beobachtungssystems sowie in der Regel Alarm- und Messwertarchive des Leitsystems für die technische Anlage erfasst und Benutzern zur Verfügung stellt. Der Operator Station Server stellt in der Regel eine Kommunikationsverbindung zu Automatisierungssystemen (wie einem Automatisierungsgerät) der technischen Anlage her und gibt Daten der technischen Anlage an wenigstens den Operator Station Client weiter, der zur Bedienung und Beobachtung eines Betriebs der einzelnen Funktionselemente der technischen Anlage verwendet werden kann.

Der Operator Station Server kann selbst über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem Operator wird ein menschlicher Bediener der technischen Anlage verstanden. Der Operator interagiert mittels spezieller Benutzerschnittstellen mit der technischen Anlage bzw. dessen Leitsystem und steuert spezielle technische Funktionen der Anlage. Hierzu kann der Operator das Bedien- und Beobachtungssystem des Leitsystems mit den Operator Station Servern und den Operator Station Client nutzen.

Bei den Daten der technischen Anlage kann es sich, im Fall einer Prozessanlage, um Prozessdaten wie Druckwerte, Temperaturwerte oder Füllstandswerte, aber beispielsweise auch um Meldungen handeln. Die Daten können Rohdaten von Sensoren darstellen. Sie können aber auch durch einen Messumformer, ein Peripheriegerät, ein Automatisierungsgerät oder eine sonstiges, hierfür ausgebildetes Gerät verarbeitet worden sein.

Der Operator kann das (erste) Anlagenbild und das (zweite) Anlagenbild (und ggf. weitere Anlagenbilder), die ihm auf dem Operator Station Client visuell dargeboten werden, für die Bedienung und Beobachtung der technischen Anlage verwenden. In den Anlagenbildern kann beispielsweise ein verfahrenstechnischer Prozess schematisch visualisiert und durch Blocksymbole (digitale Repräsentationen) der einzelnen Prozessobjekte, mit denen der verfahrenstechnische Prozess automatisiert wird, dynamisiert werden. Eine Bedienung des verfahrenstechnischen Prozesses kann dabei unter anderem durch sogenannte Faceplates möglich sein, die z.B. über die dynamisierten Blocksymbole geöffnet werden können.

Das erfindungsgemäße Leitsystem ist in vorteilhafter Weise dazu ausgebildet, auf das Eintreten eines Ereignisses hin dem Operator eine visuelle Darstellung eines zweiten Anlagenbildes darzubieten. Dabei ist wesentlich, dass sich eine Darstellungsgröße des ersten Anlagenbildes von einer Darstellungsgröße des zweiten Anlagenbildes unterscheidet. Der Begriff "Darstellungsgröße" meint dabei beispielweise eine Anzahl von Pixeln eines Bildschirms, die zur visuellen Darstellung der Anlagenbilder verwendet wird. Durch die sich unterscheidenden Darstellungsgrößen kann der Operator direkt eine Übersicht über das (aus verschiedenen Gründen möglicherweise relevante) zweite Anlagenbild erhalten, ohne dass hierfür das erste Anlagenbild nicht mehr dargestellt werden würde.

Befindet sich der Operator bei der Bedienung und Beobachtung in dem geöffneten ersten Anlagenbild, ist er bei dem erfindungsgemäßen Leitsystem nicht mehr dazu gezwungen, (vollständig) zu dem zweiten Anlagenbild zu wechseln (und damit das erste Anlagenbild zu schließen), um beurteilen zu können, ob das eingetretene Ereignis ein unmittelbares Handeln erfordert oder ob ein Handeln noch aufgeschoben werden kann, bis der Operator die Bedienung und Beobachtung in dem ersten Anlagenbild abgeschlossen hat. Das erfindungsgemäße Leitsystem kann ihm eine Übersicht über das zweite Anlagenbild bereitstellen, ohne dass hierfür die Bedienung und Beobachtung des ersten Anlagebildes beendet werden müsste.

Bevorzugt ist die Darstellungsgröße des zweiten Anlagenbildes kleiner als die Darstellungsgröße des ersten Anlagenbildes. Das zweite Anlagenbild kann hierbei in Form einer Miniaturansicht dem ersten Anlagenbild überlagert werden. Dies kann besonders bevorzugt in Form eines (zusätzlichen) Bildfensters erfolgen, in welchem das zweite Anlagenbild darstellbar bzw. dargestellt ist. Dieses Bildfenster kann der Operator verschieben, um es an eine für ihn passende Position auf einer Anzeige des Operator Station Clients zu verschieben.

Bei dem Ereignis kann es sich um eine von dem Operator erteilte Anweisung handeln. Diese Anweisung kann beispielsweise in Form eines Mausklicks, einer Berührung eines berührungsempfindlichen Bildschirms oder einer Sprachanweisung erteilt worden sein. Die Initiative geht dabei von dem Operator aus, der wiederum selbst auf das Eintreten eines Ereignisses hin, beispielsweise das Aufkommen einer Alarmmeldung, die Anweisung an das Leitsystem erteilt, das zweite Anlagenbild in der zuvor beschriebenen Art und Weise darzustellen.

Bevorzugt handelt es sich bei dem Ereignis dabei um das Auswählen des zweiten Anlagenbildes (genauer: eines Symbols oder Icons, welches auf das zweite Anlagenbild referenziert ist) aus einer Listendarstellung der (wenigstens) zwei Anlagenbilder. Dabei kann das zweite Anlagenbild in der Listendarstellung mit einer in der technischen Anlage aufgekommenen Meldung, insbesondere einer Alarmmeldung, versehen sein. Der Operator kann beim Bedienen und Beobachten in der Listendarstellung erkennen, dass eine Alarmmeldung in dem zweiten Anlagenbild aufgekommen ist, dieses zweite Anlagenbild in der Listendarstellung auswählen und sich das zweite Anlagenbild anzeigen lassen. Eine Alarmmeldung ist dabei eine Meldung, die eine in der Regel unverzügliche Reaktion des Operators der technischen Anlage erfordert. Unter einer Meldung wird dabei ein Bericht vom Eintreten eines Ereignisses verstanden, das einen Übergang aus einem diskreten Zustand innerhalb der technischen Anlage in einen anderen diskreten Zustand darstellt.

Ein Ereignis kann auch eine in der technischen Anlage aufkommende Meldung sein, insbesondere eine Alarmmeldung. Hier ist grundsätzlich keine Initiative des Operators notwendig. Auf das Aufkommen der Alarmmeldung hin kann das Leitsystem automatisch das zweite Anlagenbild in der zuvor erläuterten Art und Weise darstellen - als "aufpoppendes" Bildfenster. Es ist aber auch möglich, dass das Leitsystem den Operator zunächst fragt, ob er das zweite Anlagenbild dargestellt bekommen möchte. Dieser Zwischenschritt ist insbesondere dann von Vorteil, wenn der Operator zu einem aktuellen Zeitpunkt (noch) keine automatische Darstellung des zweiten Anlagenbildes haben möchte.

Der Operator kann bevorzugt die Eigenschaften vorgeben, die die Meldung aufweisen muss, um die visuelle Darstellung des zweiten Anlagenbildes durch den Operator Station Client auszulösen. Beispielsweise kann er vorgeben, dass nur Meldungen berücksichtigt werden, die eine bestimmte Kritikalität oder eine bestimmte Herkunft aufweisen, oder die nur an den Operator selbst adressiert sind.

Im Rahmen einer bevorzugten Weiterbildung der Erfindung umfasst die visuelle Darstellung des zweiten Anlagenbildes eine Übersicht über Alarmmeldungen, die von dem zweiten Anlagenbild umfassten Komponenten der technischen Anlage zugeordnet sind. Der Operator bekommt hierdurch die unmittelbare Information, welche Alarmmeldungen mit dem zweiten Anlagenbild verknüpft sind. Hierbei kann er beispielsweise eine Übersicht erhalten, wie viele kritische oder unkritische Alarmmeldungen Komponenten zugeordnet sind, die in dem zweiten Anlagenbild dargestellt sind.

Die zuvor formulierte Aufgabe wird zudem gelöst durch ein Verfahren zum Betreiben eines Leitsystems für eine technische Anlage, insbesondere Prozess- oder Fertigungsanlage, das wenigstens einen Operator Station Server und wenigstens einen Operator Station Client aufweist, wobei der Operator Station Server dazu ausgebildet ist, Visualisierungsinformationen zu erzeugen und zur Visualisierung an den Operator Station Client zu übertragen, um ein Bedienen und Beobachten der technischen Anlage durch einen Operator zu ermöglichen, wobei die Visualisierungsinformationen wenigstens ein erstes und ein zweites Anlagenbild der technischen Anlage umfassen, in welchen digitale Repräsentationen von Komponenten der technischen Anlage und dazugehörige Daten für das Bedienen und Beobachten der technischen Anlage visuell dargestellt oder darstellbar sind.

Bei einer bevorzugten Weiterbildung der Erfindung umfassen die Visualisierungsinformationen zusätzlich wenigstens ein drittes Anlagenbild der technischen Anlage, wobei das Leitsystem dazu ausgebildet ist, während der visuellen Darbietung des ersten Anlagenbildes durch den Operator Station Client an den Operator, bedingt durch ein eintretendes Ereignis oder bedingt durch mehrere eintretende Ereignisse, das zweite Anlagenbild und das dritte Anlagenbild durch den Operator Station Client dem Operator visuell darzubieten, wobei eine Darstellungsgröße des ersten Anlagenbildes und des zweiten Anlagenbildes, und des ersten Anlagenbildes und des dritten Anlagenbildes voneinander unterschiedlich ausgebildet sind, wobei eine Darstellungsgröße des zweiten Anlagenbildes und des dritten Anlagenbildes vorzugsweise kleiner ist als eine Darstellungsgröße des ersten Anlagenbildes. Dies ist auch für eine beliebige Zahl von weiteren Anlagenbildern möglich.

Das Verfahren umfasst die folgenden Verfahrensschritte:
a) Visuelle Darbietung des ersten Anlagenbildes durch den Operator Station Client an den Operator;
b) In Reaktion auf ein eintretendes Ereignis, visuelles Darbieten des zweiten Anlagenbildes durch den Operator Station Client an den Operator, wobei eine Darstellungsgröße des ersten Anlagenbildes und des zweiten Anlagenbildes voneinander unterschiedlich ausgebildet sind, wobei eine Darstellungsgröße des zweiten Anlagenbildes vorzugsweise kleiner ist als eine Darstellungsgröße des ersten Anlagenbildes.

Bevorzugt wird das zweite Anlagenbild dabei in einem Bildfenster dargestellt, welches als durch den Operator auf einer durch den Operator Station Client visuell dargestellten Bildanzeige verschiebbar ausgebildet ist.

Die visuelle Darstellung des zweiten Anlagenbildes umfasst bevorzugt eine Übersicht über Alarmmeldungen, die von dem zweiten Anlagenbild umfassten Komponenten der technischen Anlage zugeordnet sind.

Die zuvor erläuterte Aufgabe wird zudem durch die Verwendung eines Leitsystems zum Betrieb einer technischen Anlage, insbesondere Fertigungs- oder Prozessanlage, gelöst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Es zeigen:
- FIG 1: ein erstes Anlagenbild mit einem überlagerten zweiten Anlagenbild;
- FIG 2: das zweite Anlagenbild aus FIG 1 in einer vergrößerten Ansicht;
- FIG 3: das erste Anlagenbild aus FIG 2 mit dem überlagerten zweiten Anlagenbild und einem überlagerten dritten Anlagenbild; und
- FIG 4: ein erfindungsgemäßes Leitsystem in einer Prinzipskizze.

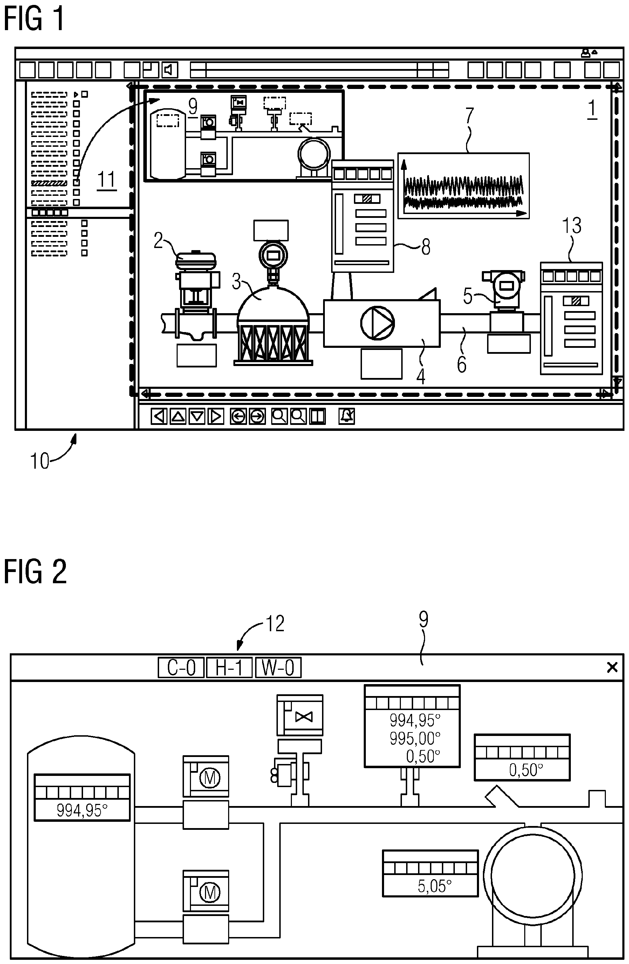

In FIG 1 ist ein erstes Anlagenbild 1 einer als verfahrenstechnischen Anlage ausgebildeten technischen Anlage dargestellt. Das erste Anlagenbild 1 umfasst verschiedene Bildobjekte 2, 3, 4, 5, die jeweils eine Prozesskomponente der verfahrenstechnischen Anlage visualisieren bzw. eine digitale Repräsentation dieser Prozessobjekte darstellen. Zu erkennen sind Rohrleitungen 6, die die einzelnen Prozesskomponenten miteinander verbinden.

Darüber hinaus umfasst das erste Anlagenbild 1 ein Diagramm 7 mit Messwerten der verfahrenstechnischen Anlage sowie verschiedene Oberflächen 8, 9 zum Bedienen und Beobachten der einzelnen Prozessobjekte. Das erste Anlagenbild 1 wird in einem linken oberen Bereich von einem zweiten Anlagenbild 9 überlagert, welches in einem verschiebbaren Bildfenster dargestellt ist. Beide Anlagenbilder 1, 9 sind in einer Darstellungsumgebung 10 eines Operator Station Clients eines Leitsystems der verfahrenstechnischen Anlage dargestellt. Das erste Anlagenbild 1 ist in FIG 1 durch eine gestrichelte Linie, das zweite Anlagenbild 9 durch Kreuzsymbole gekennzeichnet.

Auf der linken Seite von FIG 1 weist die Darstellungsumgebung 10 eine Listendarstellung 11 der Anlagenbilder 1, 9 auf. Bei dem Aufkommen einer Alarmmeldung in der verfahrenstechnischen Anlage wird in der Listendarstellung 11 die Alarmmeldung angezeigt. Daraufhin kann der Operator das betreffende (zweite) Anlagenbild 9 in der Listendarstellung 11 anwählen und dadurch die in FIG 1 zu erkennende visuelle Darstellung des zweiten Anlagenbildes 9 durch den Operator Station Client bewirken. Es ist gut zu erkenne, dass eine Darstellungsgröße des zweiten Anlagenbildes 9 kleiner als eine Darstellungsgröße des ersten Anlagenbildes 1 ist.

In FIG 2 ist das zweite Anlagenbild 9 in einer Vergrößerung dargestellt. Es weist grundsätzlich vergleichbare Elemente wie das erste Anlagenbild 1 auf, weshalb diese an dieser Stelle nicht näher erörtert werden. In einem oberen Bereich 12 ist eine Übersicht über Alarmmeldungen dargestellt, die von dem zweiten Anlagenbild 9 umfasste Komponenten der verfahrenstechnischen Anlage zugordnet sind. In dem vorliegenden Ausführungsbeispiel ist einer der Komponenten eine Alarmmeldung zugeordnet, die die Eigenschaft "kritisch" aufweist (was in FIG 2 durch die Bezeichnung "H-1" verdeutlicht ist).

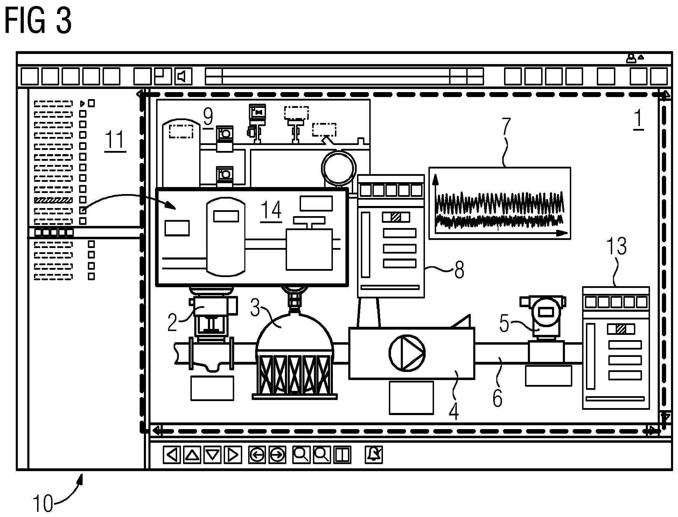

FIG 3 zeigt das erste Anlagenbild 1 zusammen mit dem überlagerten zweiten Anlagenbild 9 (vgl. FIG 1). Im Gegensatz zu der Ausführungsform gemäß FIG 1 ist dem ersten Anlagenbild 1 noch ein drittes Anlagenbild 14 in Form eines Bildfensters überlagert. Auch dieses Bildfenster kann als vom Operator verschiebbar ausgebildet sein.

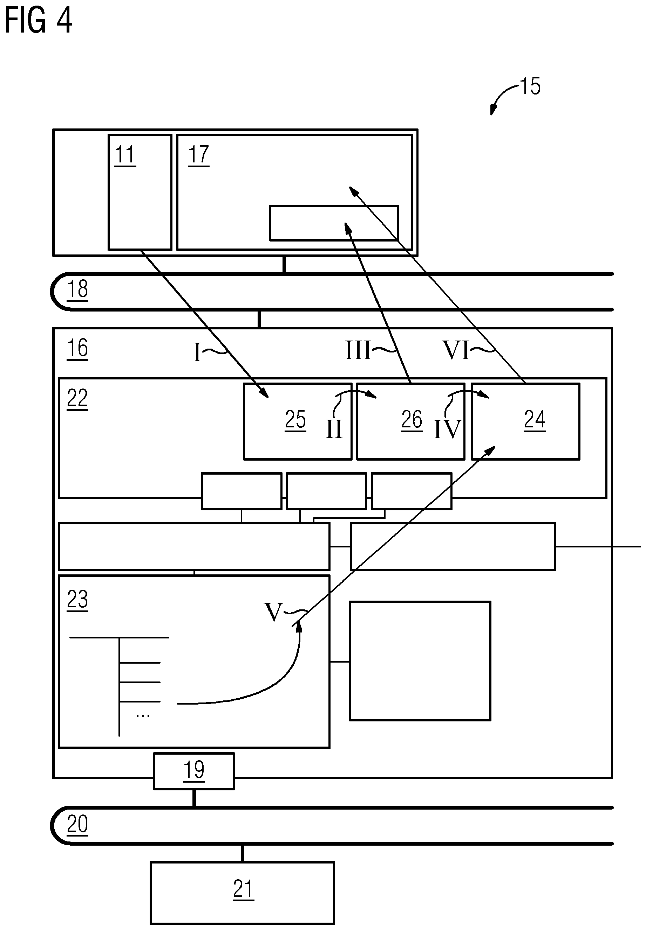

In FIG 4 ist ein Teil eines erfindungsgemäßen Leitsystems 15 einer als Prozessanlage, d.h. als verfahrenstechnische Anlage, ausgebildeten technischen Anlage dargestellt. Das Leitsystem 15 umfasst einen Operator Station Server 16 und einen Operator Station Client 17.

Der Operator Station Server 16 und der Operator Station Client 17 sind über einen Terminalbus 18 miteinander und optional mit nicht dargestellten weiteren Komponenten des Leitsystems 15 wie einem Engineering Station Server verbunden.

Ein Benutzer bzw. Operator kann zum Zwecke des Bedienens und Beobachtens über den Operator Station Client 17 mittels des Terminalbus 18 auf den Operator Station Server 16 zugreifen. Der Terminalbus 18 kann, ohne sich darauf zu beschränken, beispielsweise als Industrial Ethernet ausgebildet sein.

Der Operator Station Server 16 weist eine Geräteschnittstelle 19 auf, die mit einem Anlagenbus 20 verbunden ist. Über diese Geräteschnittstelle 19 kann der Operator Station Server 16 mit einem Automatisierungsgerät 21 sowie mit optional vorhandenen weiteren Komponenten der Prozessanlage wie Peripheriegeräten (nicht dargestellt) kommunizieren. Der Anlagenbus 20 kann, ohne sich darauf zu beschränken, beispielsweise als Industrial Ethernet ausgebildet sein. Das Automatisierungsgerät 21 kann mit einer beliebigen Anzahl an Subsystemen (nicht dargestellt) verbunden sein.

Auf dem Operator Station Server 16 sind (unter anderem) ein Visualisierungsdienst 22 und ein Prozessabbild 23 implementiert. Der Operator Station Client 17 ist dazu ausgebildet, Anlagenbilder zum Bedienen und Beobachten der Prozessanlage darzustellen. Das Automatisierungsgerät 21 ist dazu ausgebildet, eine Automatisierung der Prozessanlage zu steuern und zu überwachen. Hierzu ist auf dem Automatisierungsgerät 21 ein Steuerprogramm implementiert, welches im Rahmen einer Projektierung der Automatisierung der Prozessanlage auf das Automatisierungsgerät 21 geladen worden ist. Das Automatisierungsgerät 21 empfängt Prozessdaten (z.B. Messwerte) aus der Prozessanlage und überträgt diese an das Prozessabbild 23 des Operator Station Servers 16.

Ein spezialisierter Anzeigendienst 24 des Visualisierungsdienstes 22 des Operator Station Servers 16 erzeugt das erste Anlagenbild 1 (vgl. FIG 1 und 3), das zur Visualisierung an den Operator Station Client 17 übertragen wird. Wie anhand FIG 1 beschrieben, kann der Operator von sich aus (oder alternativ das Leitsystem 15 automatisch) die visuelle Darstellung des zweiten Anlagenbildes 9 triggern. Hierzu kann der Operator das zweite Anlagenbild in der Listendarstellung 11 der Anlagenbilder 1, 9 anwählen (Schritt I). Ein Empfangsdienst 25 des Operator Station Servers 16 empfängt die Anweisung des Operators und gibt sie an einen Objektdienst 26 weiter (Schritt II). Dieser Objektdienst 26 überträgt die Visualisierungsinformation bezüglich des zweiten Anlagenbildes 9 an den Operator Station Client 17, damit dieser das zweite Anlagenbild 9 dem ersten Anlagenbild 1 überlagert (Schritt III) .

Zusätzlich übermittelt der Objektdienst 26 dem Anzeigendienst 24 die Anweisung, eine alarmaufschlüsselnde Übersicht über Alarmmeldungen zu erzeugen, die dem Operator einen unmittelbare Übersicht über die Alarmmeldungen ermöglicht, die dem zweiten Anlagenbild 9 zugeordnet sind (Schritt IV). Der Anzeigendienst 24 greift zur Erzeugung dieser Übersicht auf das Prozessabbild 23 zu, in welchem hinterlegt ist, welchem Prozessobjekt welche Alarmmeldung (mit welcher Eigenschaft) aufweist (Schritt V). Durch die Kenntnis des Anzeigendienstes 24, welche Prozessobjekte dem zweiten Anlagenbild 9 zugeordnet sind, kann der Anzeigendienst 24 auch die Alarmmeldungen entsprechend dem zweiten Anlagenbild 9 zuordnen und die alarmaufschlüsselnde Übersicht erzeugen. Diese wird dann an den Operator Station Client 17 übertragen (Schritt VI) und von diesem gemeinsam mit dem zweiten Anlagenbild 9 visuell dargestellt.

Durch die alarmaufgeschlüsselten Miniaturansichten (zweites Anlagenbild 9 und drittes Anlagenbild 14) kann der Operator seine Bedienung und Beobachtung besser priorisieren. Unnötige Bildwechsel und Unterbrechungen der Bearbeitung bestehender Aufgaben können mit dem zuvor erläuterten Leitsystem 15 effektiv vermieden werden.

Durch die Erfindung kann daher ein wesentlicher Beitrag für eine verbesserte Bedienbarkeit des Leitsystems einer technischen Anlage geleistet werden.

## Patentansprüche

1. Leitsystem (15) für eine technische Anlage, insbesondere Prozess- oder Fertigungsanlage, das wenigstens einen Operator Station Server (16) und wenigstens einen Operator Station Client (17) aufweist, wobei der Operator Station Server (16) dazu ausgebildet ist, Visualisierungsinformationen zu erzeugen und zur Visualisierung an den Operator Station Client (17) zu übertragen, um ein Bedienen und Beobachten der technischen Anlage durch einen Operator zu ermöglichen, wobei die Visualisierungsinformationen wenigstens ein erstes Anlagenbild (1) und ein zweites Anlagenbild (9) der technischen Anlage umfassen, in welchen digitale Repräsentationen (2, 3, 4, 5, 6) von Komponenten der technischen Anlage und dazugehörige Daten (7, 8, 9) für das Bedienen und Beobachten der technischen Anlage visuell dargestellt oder darstellbar sind,
**dadurch gekennzeichnet, dass**
das Leitsystem (15) dazu ausgebildet ist, während der visuellen Darbietung des ersten Anlagenbildes (1) an den Operator durch den Operator Station Client (17), bedingt durch ein eintretendes Ereignis, das zweite Anlagenbild (9) durch den Operator Station Client (17) dem Operator visuell darzubieten, wobei eine Darstellungsgröße des ersten Anlagenbildes (1) und des zweiten Anlagenbildes (9) voneinander unterschiedlich ausgebildet sind, und wobei eine Darstellungsgröße des zweiten Anlagenbildes (9) vorzugsweise kleiner ist als eine Darstellungsgröße des ersten Anlagenbildes (1).

2. Leitsystem (15) nach Anspruch 1, bei dem ein Ereignis eine von dem Operator erteilte Anweisung darstellt.

3. Leitsystem (15) nach Anspruch 2, bei dem das Ereignis ein Auswählen des zweiten Anlagenbildes (9) aus einer Listendarstellung (11) der Anlagenbilder darstellt.

4. Leitsystem (15) nach Anspruch 3, bei dem das zweite Anlagenbild (9) in der Listendarstellung (11) mit einer in der technischen Anlage aufkommenden Meldung, insbesondere einer Alarmmeldung, versehen ist.

5. Leitsystem (15) nach Anspruch 1, bei dem ein Ereignis eine in der technischen Anlage aufkommende Meldung, insbesondere eine Alarmmeldung, darstellt.

6. Leitsystem (15) nach Anspruch 5, bei dem vorgebbar ist, welche Eigenschaften die Meldung aufweisen muss, um die visuelle Darstellung des zweiten Anlagenbildes (9) durch den Operator Station Client (17) auszulösen.

7. Leitsystem (15) nach einem der vorangegangenen Ansprüche, bei dem das zweite Anlagenbild (9) in einem Bildfenster darstellbar ist, welches als durch den Operator auf einer durch den Operator Station Client (17) visuell dargestellten Bildanzeige verschiebbar ausgebildet ist.

8. Leitsystem (15) nach einem der vorangegangenen Ansprüche, bei dem die visuelle Darstellung des zweiten Anlagenbildes (9) eine Übersicht (12) über Alarmmeldungen umfasst, die von dem zweiten Anlagenbild (9) umfassten Komponenten der technischen Anlage zugeordnet sind.

9. Leitsystem (15) nach Anspruch 8, bei dem die Übersicht (12) eine jeweilige Anzahl von Alarmmeldungen einer bestimmten Alarmklasse umfasst.

10. Leitsystem (15) nach einem der vorangegangenen Ansprüche, bei dem die Visualisierungsinformationen zusätzlich wenigstens ein drittes Anlagenbild (14) der technischen Anlage umfassen, wobei das Leitsystem (15) dazu ausgebildet ist, während der visuellen Darbietung des ersten Anlagenbildes (1) durch den Operator Station Client (17) an den Operator, bedingt durch ein eintretendes Ereignis oder bedingt durch mehrere eintretende Ereignisse, das zweite Anlagenbild (9) und das dritte Anlagenbild (14) durch den Operator Station Client (17) dem Operator visuell darzubieten, wobei eine Darstellungsgröße des ersten Anlagenbildes (1) und des zweiten Anlagenbildes (9), und des ersten Anlagenbildes (1) und des dritten Anlagenbildes (14) voneinander unterschiedlich ausgebildet sind, wobei eine Darstellungsgröße des zweiten Anlagenbildes (9) und des dritten Anlagenbildes (14) vorzugsweise kleiner ist als eine Darstellungsgröße des ersten Anlagenbildes (1).

11. Verfahren zum Betreiben eines Leitsystems (15) für eine technische Anlage, insbesondere Prozess- oder Fertigungsanlage, das wenigstens einen Operator Station Server (16) und wenigstens einen Operator Station Client (17) aufweist, wobei der Operator Station Server (16) dazu ausgebildet ist, Visualisierungsinformationen zu erzeugen und zur Visualisierung an den Operator Station Client (17) zu übertragen, um ein Bedienen und Beobachten der technischen Anlage durch einen Operator zu ermöglichen, wobei die Visualisierungsinformationen wenigstens ein erstes Anlagenbild (1) und ein zweites Anlagenbild (9) der technischen Anlage umfassen, in welchen digitale Repräsentationen (2, 3, 4, 5, 6) von Komponenten der technischen Anlage und dazugehörige Daten (7, 8, 9) für das Bedienen und Beobachten der technischen Anlage visuell dargestellt oder darstellbar sind, das Verfahren umfassend:
a) Visuelle Darbietung des ersten Anlagenbildes (1) durch den Operator Station Client (17) an den Operator;
b) In Reaktion auf ein eintretendes Ereignis, visuelles Darbieten des zweiten Anlagenbildes (9) durch den Operator Station Client (17) an den Operator, wobei eine Darstellungsgröße des ersten Anlagenbildes (1) und des zweiten Anlagenbildes (9) voneinander unterschiedlich ausgebildet sind, wobei eine Darstellungsgröße des zweiten Anlagenbildes (9) vorzugsweise kleiner ist als eine Darstellungsgröße des ersten Anlagenbildes (1).

12. Verfahren nach Anspruch 11, bei dem ein Ereignis eine von dem Operator empfangene Anweisung darstellt.

13. Verfahren nach Anspruch 11, bei dem ein Ereignis eine in der technischen Anlage aufkommende Meldung, insbesondere eine Alarmmeldung, darstellt.

14. Verfahren nach einem der Ansprüche 11 bis 13, bei dem das zweite Anlagenbild (9) in einem Bildfenster dargestellt wird, welches als durch den Operator auf einer durch den Operator Station Client (17) visuell dargestellten Bildanzeige verschiebbar ausgebildet ist.

15. Verfahren nach einem der Ansprüche 11 bis 14, bei dem die visuelle Darstellung des zweiten Anlagenbildes (9) eine Übersicht (12) über Alarmmeldungen umfasst, die von dem zweiten Anlagenbild (9) umfassten Komponenten der technischen Anlage zugeordnet sind.
